# EUROPEAN PATENT SPECIFICATION

(11) **EP 4 592 839 B1**
(45) Date of publication and mention of the grant of the patent: **02.12.2026**
(21) Application number: 24829888.7
(22) Date of filing: 28.02.2024
(51) Int. Cl.: G06F 9/451, G06F 3/04883, G06F 3/0485, G06F 3/04845, G06F 3/044

(54) **INPUT RESPONSE OPTIMIZATION METHOD AND RELATED ELECTRONIC DEVICE**
EINGABEANTWORTOPTIMIERUNGSVERFAHREN UND ZUGEHÖRIGE ELEKTRONISCHE VORRICHTUNG
PROCÉDÉ D'OPTIMISATION DE RÉPONSE D'ENTRÉE ET DISPOSITIF ÉLECTRONIQUE ASSOCIÉ

(30) Priority: 29.06.2023 CN 202310786817
(43) Date of publication of application: 30.07.2025
(73) Proprietor: Honor Device Co., Ltd., Shenzhen, Guangdong 518040 (CN)
(72) Inventor: CAI, Huiyue, Shenzhen, Guangdong 518040 (CN); XIE, Qiyu, Shenzhen, Guangdong 518040 (CN); CHEN, Jingjing, Shenzhen, Guangdong 518040 (CN)
(74) Representative: Goddar, Heinz J.
(86) International application number: PCT/CN2024/079030
(87) International publication number: WO 2025/001232

(56) References cited:
- WO-A1-2018/233636
- CN-A- 112 346 935
- CN-A- 112 351 326
- CN-A- 114 327 697
- US-A1- 2007 038 939
- ABRAHAM ADY: "Android Developers Blog: High refresh rate rendering on Android", 27 April 2020 (2020-04-27), pages 1 - 6, XP093355414, Retrieved from the Internet <URL:https://android-developers.googleblog.com/2020/04/high-refresh-rate-rendering-on-android.html?utm_source=chatgpt.com>
- YUN MIN HONG MHYUN@RICE EDU ET AL: "Reducing Latency by Eliminating Synchrony", PROCEEDINGS OF THE FIFTH INTERNATIONAL SYMPOSIUM OF CHINESE CHI, ACMPUB27, NEW YORK, NY, USA, 3 April 2017 (2017-04-03), pages 331 - 340, XP058581124, ISBN: 978-1-4503-6371-6, DOI: 10.1145/3038912.3052557
- SHELLER JORDAN: "Enabling Intel Adaptive Sync with 11th-generation Intel Processor...", 29 August 2019 (2019-08-29), pages 1 - 2, XP093355408, Retrieved from the Internet <URL:https://www.intel.com/content/www/us/en/developer/articles/technical/enabling-intel-adaptive-sync-with-11th-generation-intel-processor-graphics-and-microsoft.html?utm_source=chatgpt.com>

## Description

This application claims priority to Chinese Patent Application No. 202310786817.5, filed with the China National Intellectual Property Administration on June 29, 2023 and entitled "INPUT RESPONSE OPTIMIZATION METHOD AND RELATED ELECTRONIC DEVICE".

### TECHNICAL FIELD

This application relates to the field of terminal technologies, and in particular, to an input response optimization method and a related electronic device.

### BACKGROUND

Touch control performance plays a very important role in gaming experience. The touch control performance means performance of implementing corresponding operation control by touching a touch panel (touch panel, TP). The touch control performance covers various performance indicators such as sensitivity, continuity, responsiveness, and an accidental touch, of touch control. As an important performance indicator of the touch control performance, the sensitivity directly affects the gaming experience. Therefore, how to optimize sensitivity of input response such as touch control is an urgent technical problem that needs to be resolved by a person skilled in the art.

Abraham Ady, "Android Developers Blog: High refresh rate rendering on Android", 27 April 2020, discloses high refresh rate rendering on Android devices and explains that devices may support multiple refresh rates, such as 60 Hz, 90 Hz, and 120 Hz, to provide smoother animations and lower latency, wherein an Android UI rendering pipeline includes an application UI thread that processes input events, a RenderThread that issues drawing commands to a GPU, SurfaceFlinger that composes application windows, and a display that presents the frame, the rendering pipeline being controlled by Android Choreographer based on vertical synchronization, Vsync, events, and wherein some applications, including most games, may have their own custom rendering pipelines and may influence the refresh rate selected by the Android platform, for example by setting a frame rate on a window or surface.

Min Hong Yun, Songtao He, and Lin Zhong, "Reducing Latency by Eliminating Synchrony", Proceedings of the Fifth International Symposium of Chinese CHI, 3 April 2017, pages 331 to 340, discloses an asynchronous input-to-display path for mobile systems referred to as Presto, wherein multiple synchronization points in the input-to-display path are identified as a source of latency, and wherein Presto reduces latency by relaxing conventional requirements relating to frame drops and tearing effects for a main application under interaction, in particular by using just-in-time trigger, JITT, to reduce synchronization between an input subsystem and an application, and position-aware rendering, PAR, to selectively allow an application to write into a graphics buffer being externalized to a display, while guarding against consecutive frame drops and limiting tearing effects to a region around a touch point.

WO 2018/233636 A1 discloses methods, apparatuses, and terminals for accelerating interface rendering, wherein a method applied to an Android terminal supporting a Choreographer mechanism comprises recording a type of an input event triggered by a touch operation, disabling a vertical synchronization function when the input event is a press or slide, determining whether a first drawing event of the touch operation occurs, calling a drawing process of the first drawing event without waiting for a vertical synchronization signal if the first drawing event occurs, and then enabling the vertical synchronization function and continuing subsequent interface drawing of the touch operation, and wherein further measures for improving responsiveness include setting a priority of input thread tasks, serial processing by an input kernel-mode driver thread, and applying anti-shake filtering parameters including a touchscreen reporting rate.

### SUMMARY

The invention is defined by the appended claims.

### BRIEF DESCRIPTION OF DRAWINGS

FIG. 1A is a diagram of a touch control service chain according to an embodiment of this application;
FIG. 1B is a diagram of delivery of a touch control event according to an embodiment of this application;
FIG. 2 is a diagram of a hardware structure of an electronic device according to an embodiment of this application;
FIG. 3 is a diagram of a software architecture of an electronic device according to an embodiment of this application;
FIG. 4 is a diagram of delivery effect of a touch control event according to an embodiment of this application;
FIG. 5 and FIG. 6 are schematic flowcharts of a method according to an embodiment of this application;
FIG. 7 is a diagram of a data flow direction according to an embodiment of this application;
FIG. 8 and FIG. 9 are schematic flowcharts of a method according to an embodiment of this application; and
FIG. 10 and FIG. 11 are diagrams of delivery effect of an input event according to an embodiment of this application.

### DESCRIPTION OF EMBODIMENTS

In the specification, claims, and accompanying drawings of this application, the terms "first", "second", "third", and the like are intended to distinguish between different objects but do not indicate a particular order. In addition, the terms "include", "have", and any variant thereof are intended to cover a non-exclusive inclusion. For example, a series of steps or units are included, or optionally, a step or unit that is not listed is included, or optionally, another step or unit that is intrinsic to a process, method, product, or device is included.

Only parts related to this application are shown in the accompanying drawings, rather than all content. Before discussing the example embodiments in more detail, it should be noted that some of the example embodiments are described as processes or methods depicted as flowcharts. Although the flowchart describes operations (or steps) as a sequential process, a plurality of operations may be performed in parallel, concurrently, or simultaneously. In addition, an order of the operations may be rearranged. The process may be ended when operations of the process are completed, but may also have additional steps not included in the figure. The process may correspond to a method, a function, a procedure, a subroutine, a subprogram, and the like.

Terms such as "component", "module", "system", and "unit" used in this specification are generally intended to refer to a computer-related entity, hardware, firmware, a combination of hardware and software, software, or software in execution. For example, a unit may be, but is not limited to, a process running on a processor, a processor, an object, an executable file, an executable thread, a program, and/or the unit is distributed between two or more computers. In addition, these units may be executed by various computer-readable media storing various data structures. For example, a unit may communicate through local and/or remote processes based on a signal with one or more data packets (for example, second unit data exchanged by another unit from a local system, a distributed system, and/or a network, for example, the Internet that interacts with another system by using a signal, for example, the internet that interacts with another system by using a signal).

The following first describes technical terms in embodiments of this application.

### 1. Frames per second (Frames per second, FPS).

The FPS, also referred to as a frame rate, is a rate or frequency at which a new frame is displayed. The frame rate determines a quantity of image frames drawn per second, that is, the frame rate represents a capability of drawing the image frames per second. Essentially, when the frame rate is higher, more frames per second are displayed, generating a smoother and more realistic motion image. The frame rate is determined by a combination of used modules, such as software, central processing unit (CPU), and a graphics card.

### 2. Refresh rate.

The refresh rate is a refresh rate of a display, means a quantity of times that an electron beam repeatedly scans an image on a display screen, that is, describes a quantity of display refreshes of the display, and is measured in hertz (Hz). The refresh rate determines a quantity of new image frames that can be seen per second.

### 3. Touch panel (touch panel, TP) reporting rate.

The TP reporting rate means a quantity of times that a touch chip (integrated circuit, IC) reports a touch position (coordinates) per unit time.

### 4. Game engine.

The game engine means some pre-written, editable game systems, or core components of some interactive real-time image applications. For example, the game engine may include the following software modules: a rendering engine (namely, a "renderer", including a two-dimensional image engine and a three-dimensional image engine), a physical engine, a collision detection system, sound effect, a scripting engine, computer animation, artificial intelligence, a network engine, scenario management, and the like. In other words, the game engine can implement processing such as rendering, sound effect, and animation of a game image.

Image smoothness, touch control performance, game display effect, a gaming cooling capability, network stability, game audio effect, and the like play very important roles in gaming experience. The touch control performance covers various performance indicators of touch control, such as sensitivity, continuity, responsiveness, and an accidental touch, and is related to game touch control experience of a user. As an important performance indicator of the touch control performance, the touch control sensitivity directly affects gaming experience.

During specific implementation, a touch control delay affects the touch control sensitivity. Especially in a competitive game, a millisecond touch control delay difference may determine an outcome of a competition. The touch control delay is end-to-end experience. To reduce the touch control delay, it is necessary to analyze an internal structure of an entire touch control service chain and find an optimization point in the chain.

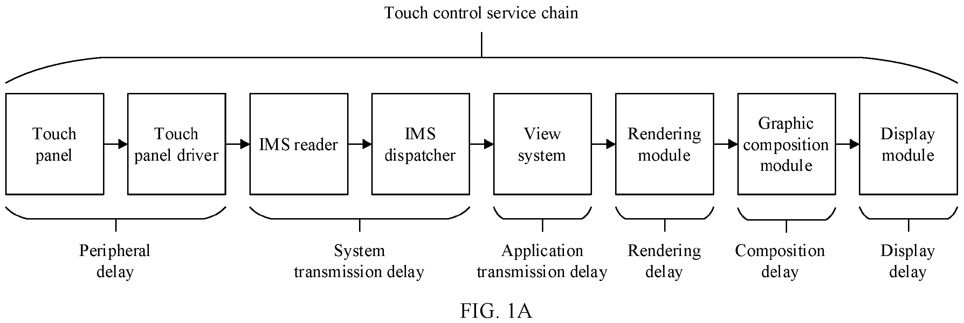

For example, FIG. 1A shows a diagram of a touch control service chain. It can be seen that the touch control service chain includes a touch panel (touch panel, TP), a touch panel driver, an input manager service (input manager service, IMS) reader (reader), an IMS dispatcher (dispatcher), a view (view) system, a rendering module, a graphic composition module, and a display module. For example, the touch panel receives a touch control operation and transmits the touch control operation to an IMS module through the touch panel driver. The IMS reader reads this touch control event (Move). The touch control event is dispatched to the view system through the IMS dispatcher. Then, the view system delivers the touch control event to the rendering module through a user interface (user interface, UI) thread (thread) for rendering. The UI thread is a main thread of an application process.

For example, if the touch control event is an input event obtained through a user interface of a game application, the rendering module is a game engine. In other words, the user interface of the game application is rendered through the game engine. For example, if the touch control event is an input event obtained through a user interface of an application other than the game application, the rendering module is a native (native) rendering module (for example, a three-dimensional graphics processing library) of an electronic device.

After the rendering module completes rendering, the graphic composition module combines rendered content into a graphic, and sends the composed graphic to the display module for display.

In this service processing process, a delay is generated in processing processes of the touch panel and the touch panel driver. This delay can be briefly referred to as a peripheral delay. A delay is generated in processing processes of the IMS reader and IMS dispatcher. This delay can be briefly referred to as a system transmission delay. A delay is generated in a processing process of the view system. This delay can be briefly referred to as an application transmission delay. A delay is generated in a processing process of the rendering module. This delay can be briefly referred to as a rendering delay. A delay is generated in a processing process of the graphic composition module. This delay can be briefly referred to as a composition delay. A delay is generated in a processing process of the display module. This delay can be briefly referred to as a display delay.

Based on in-depth analysis of the touch control service chain and the related delays, it is found that delivery of the touch control event in the processing process of the view system is limited by a frequency of vertical synchronization (vertical synchronization, VSync).

A basic idea of the VSync is synchronizing an FPS with a refresh rate of a display through a vertical synchronization signal (briefly referred to as a VSync signal) to avoid a phenomenon of image "tearing". If there is no VSync signal, when rendering of frame data is fast, and the display cannot keep up with rendering, a specific frame may be currently displayed, and another frame is triggered to be displayed on the display, resulting in a phenomenon of image "tearing".

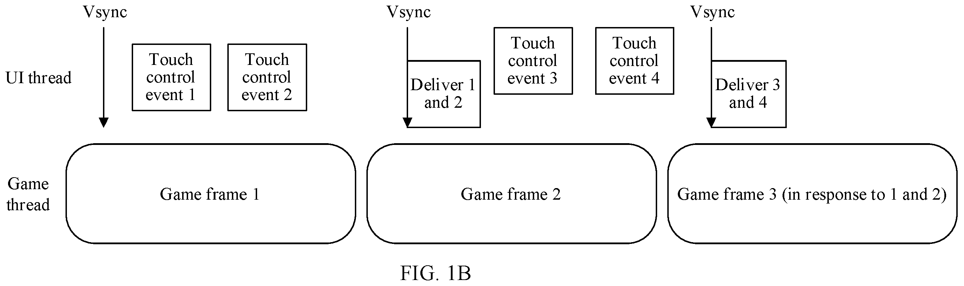

Specifically, in a process of delivering the touch control event based on the VSync, the touch control event is buffered in a buffer queue before the display refreshes, then the touch control event is delivered to the rendering module when the VSync signal arrives, and finally the rendering module generates a corresponding image according to the obtained touch control event. For ease of understanding, for example, refer to FIG. 1B.

FIG. 1B uses touch control in a gaming experience process as an example. It can be seen that the UI thread in the view system can receive a touch control event 1 and a touch control event 2 in a process in which a game thread (game thread) displays a game frame 1. For example, the game thread can call the game engine to perform an operation such as rendering. Although the UI thread receives the touch control event 1 and the touch control event 2, the VSync signal does not arrive yet due to the frequency of the VSync. Therefore, the UI thread buffers the received touch control events. After receiving the VSync signal, the UI thread delivers the touch control event 1 and the touch control event 2 to the rendering module for rendering. Similarly, the UI thread can receive a touch control event 3 and a touch control event 4 in a process in which the game thread displays a game frame 2. Although the UI thread receives the touch control event 3 and the touch control event 4, the VSync signal does not arrive yet due to the frequency of the VSync. Therefore, the UI thread buffers the received touch control events. After receiving a next VSync signal, the UI thread delivers the touch control event 3 and the touch control event 4 to the rendering module for rendering. In addition, it can be seen that the touch control event 1 and the touch control event 2 are delivered when the game frame 2 is displayed, but due to delays in rendering, composition, and display after the delivery, a corresponding interface is displayed in response to the touch control event 1 and the touch control event 2 until a game frame 3. This results in a severe touch control delay.

For example, the arrival of the VSync signal in embodiments of this application means occurrence of a rising edge or a falling edge of the VSync signal. For example, if the VSync signal is converted from a low level of "0" to a high level of "1", this is a rising edge. If the VSync signal is converted from a high level of "1" to a low level of "0", this is a falling edge.

Based on the foregoing descriptions, the VSync effectively limits the FPS to a range of the refresh rate of the display, to avoid a "tearing phenomenon". However, in scenarios such as a game, the VSync results in a mismatch between receiving and delivering the touch control event by the UI thread in the system, causing an unnecessary delay and increasing a touch control delay.

A design of the touch control service chain shown in FIG. 1A is oriented toward universality, but a game application scenario has particularity. That is, an application interface of the game application is obtained by rendering through the game engine. Image rendering of the game engine can be performed in real time, and this rendering is not controlled by the VSync. If the game application scenario follows the foregoing solution of delivering the touch control event based on the VSync signal, a touch control response delay may be caused, and a user requirement for quick response to the touch control event cannot be met. On this basis, embodiments of this application provide an input response optimization method and a related electronic device, to break an existing limitation of touch control event delivery, allow the game thread to receive the touch control event faster and at a higher frequency, reduce the touch control delay, optimize sensitivity of input response such as touch control, and improve gaming experience of a user. The following describes examples.

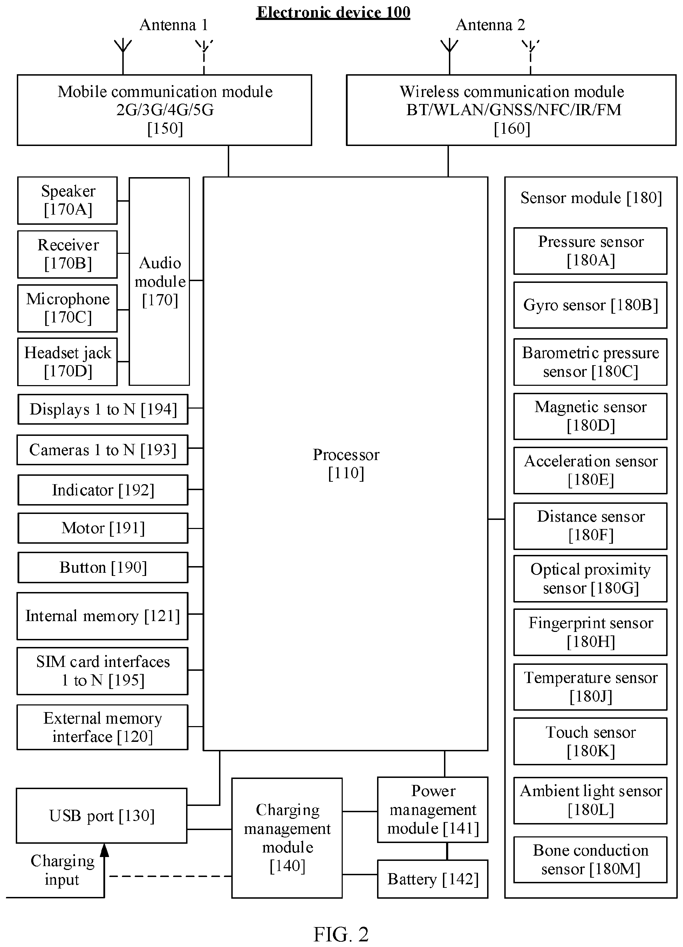

A structure of an electronic device in embodiments of this application is first described. FIG. 2 is a diagram of a hardware structure of an electronic device 100 according to an embodiment of this application.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have a different component arrangement. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate devices, or may be integrated into one or more processors.

A wireless communication function of the electronic device 100 may be implemented via the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antennas may be used in combination with a tuning switch.

The mobile communication module 150 may provide a wireless communication solution that includes 2G/3F/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be arranged in the processor 110. In some embodiments, at least some of the functional modules of the mobile communication module 150 may be disposed in a same device as at least some of modules of the processor 110.

The wireless communication module 160 may provide a solution applied to the electronic device 100 for wireless communication including a wireless local area network (wireless local area networks, WLAN) (for example, a Wi-Fi network), Bluetooth (BlueTooth, BT), BLE broadcasting, a global navigation satellite system (global navigation satellite system, GNSS), frequency modulation (frequency modulation, FM), near field communication (near field communication, NFC), an infrared technology (infrared, IR), and the like. The wireless communication module 160 may be one or more components integrating at least one communication processing module. The wireless communication module 160 receives an electromagnetic wave by using the antenna 2, performs frequency modulation on the electromagnetic wave signal, filters the electromagnetic wave signal, and sends a processed signal to the processor 110. The wireless communication module 160 may also receive a to-be-sent signal from the processor 110, perform frequency modulation on and amplify the to-be-sent signal, and convert the to-be-sent signal into an electromagnetic wave by using the antenna 2 for radiation.

The electronic device 100 implements a display function through the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs, which execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a Miniled, a Microled, a Micro-oled, quantum dot light-emitting diodes (quantum dot light emitting diodes, QLED), or the like. In some embodiments, the electronic device 100 may include 1 or N displays 194, and N is a positive integer greater than 1.

The electronic device 100 may implement a shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal. The photosensitive element of the camera lens transmits the electrical signal to the ISP for processing, so that the ISP converts the electrical signal into an image visible to naked eyes. The ISP may further perform algorithm optimization on noise and brightness of the image. The ISP may further optimize parameters such as exposure and a color temperature of a shooting scene. In some embodiments, the ISP may be disposed in the camera 193.

The digital signal processor is configured to process a digital signal, and may further process another digital signal in addition to the digital image signal. For example, when the electronic device 100 selects a frequency, the digital signal processor is configured to perform Fourier transformation on frequency energy.

The NPU is a neural-network (neural-network, NN) computing processor. The NPU quickly processes input information with reference to a structure of a biological neural network, for example, a transfer mode between human brain neurons, and may further continuously perform selflearning. Applications such as intelligent cognition of the electronic device 100 may be implemented through the NPU, for example, image recognition, facial recognition, speech recognition, and text understanding.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The electronic device 100 may be used to listen to music or listen to a hands-free call through the speaker 170A.

The receiver 170B, also referred to as an "earpiece", is configured to convert an electrical audio signal into a sound signal. When a call is answered or voice information is listened to by using the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may place the mouth of the user near the microphone 170C to make a sound, to input a sound signal to the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, implement noise reduction, and identify a sound source, to implement a directional recording function and the like.

Based on the diagram of the hardware structure of the electronic device 100 according to this embodiment of this application in FIG. 2, the following describes, by using an example, a block diagram of a software structure of the electronic device 100 according to an embodiment of this application.

A software system of the electronic device 100 may use a layered architecture, an eventdriven architecture, a microkernel architecture, a micro service architecture, or a cloud architecture. In this embodiment of this application, an Android system with a layered architecture is used as an example to describe a software structure of the electronic device 100.

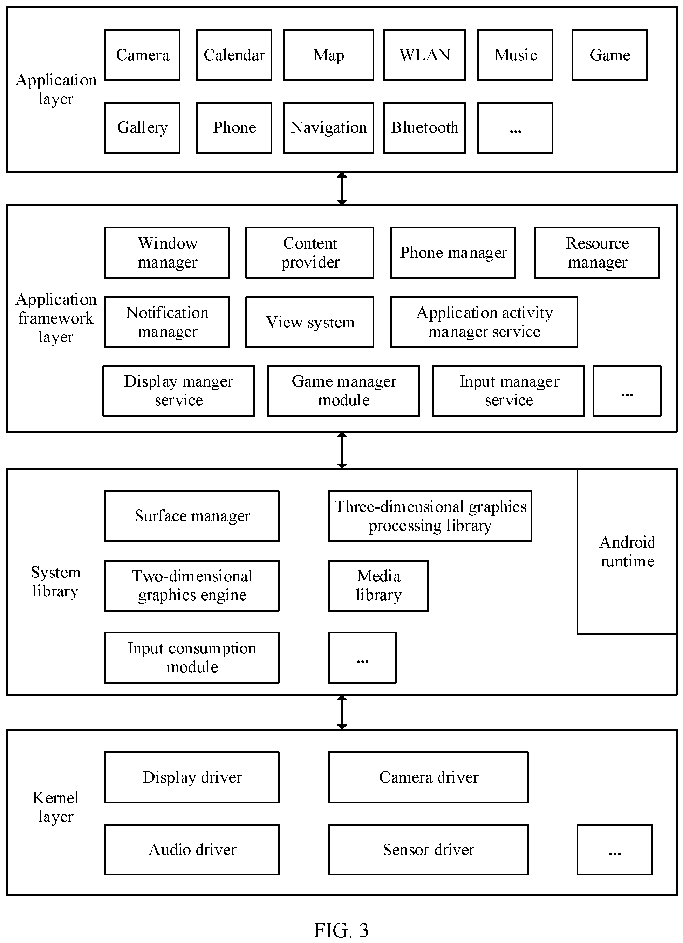

For example, refer to FIG. 3. In the layered architecture, software is divided into several layers, and each layer has a clear role and task. The layers communicate with each other through software interfaces. In some embodiments, the Android system is divided into four layers: an application layer, an application framework layer, an Android runtime (Android runtime) and system (native) library, and a kernel layer from top to bottom.

The application layer may include a series of application packages. As shown in FIG. 3, the application packages may include applications such as camera, gallery, calendar, phone, map, navigation, WLAN, Bluetooth, music, videos, or game.

The application framework layer provides an application programming interface (application programming interface, API) and a programming framework for an application at the application layer. The application framework layer includes some predefined functions.

As shown in FIG. 3, the application framework layer may include a window manager, a content provider, a phone manager, a resource manager, a notification manager, a view system, an application activity manager service (activity manager service, AMS), a display manger service (display manger service, DMS), a game manager module (game manager, GM), and an input manager service (input manager service, IMS), and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The phone manager is configured to provide a communication function for the electronic device 100, for example, call status management (including connected, hang-up, and the like).

The resource manager provides various resources, such as a localized character string, an icon, a picture, a layout file, and a video file for an application.

The notification manager enables an application to display notification information in a status bar, and may be configured to convey a notification message that may automatically disappear after a short pause without requiring user interaction. For example, the notification manager is configured to notify download completion, provide a message notification, and the like. The notification manager may alternatively be a notification that appears in a top status bar of the system in a form of a graph or scroll bar text, for example, a notification of an application that is run on a background, or may be a notification that appears on the screen in a form of a dialog window. For example, text information is displayed in the status bar, an alert tone is made, the electronic device vibrates, or an indicator blinks.

The view system includes visual controls such as a control for displaying text and a control for displaying a picture. The view system may be configured to construct an application. A display interface may include one or more views. For example, a display interface including an SMS message notification icon may include a text display view and a picture display view.

The application activity manager service is used for processing, such as foreground and background scheduling of an application. In embodiments of this application, the application activity manager service may provide identification information of an application for a game manager module.

The display manager service is used to manage information such as display brightness and a display frame rate, and the like. In embodiments of this application, the display manager service can provide information such as a frame rate of an application for the game manager module.

The game manager module is responsible for collecting and optimizing information about the game application, including a frame rate, definition, a game scenario, and the like., and providing optimal system configuration based on the obtained information and a system capability. In embodiments of this application, a game application scenario identification module is added to the game manager module, to identify the game application scenario and indicate a used input event delivery manner. Specific implementation is described in the following description. Details are not described herein.

The input manager service is used to deliver the input event to the application process and implement management of a TP reporting rate, and the like. This input event includes a touch control event, a mouse event, a keyboard event, and the like. In embodiments of this application, the input manager service can provide information such as the TP reporting rate for the game manager module.

For example, the foregoing functional modules such as the application activity manager service, the display manager service, the game manager module, or the input manager service can be set up in the application framework layer as independent modules; or can be set up in the application framework layer by integrating with another functional module. Specific forms of disposing the functional modules are not limited in embodiments of this application. In addition, it may be understood that the functional modules may also be referred to by other names, not limited to the names shown in embodiments of this application, and belong to the functional modules described in embodiments of this application, provided that functions described in embodiments of this application can be implemented.

The Android runtime includes a kernel library and a virtual machine. The Android runtime is responsible for scheduling and managing the Android system.

The kernel library includes two parts: a function that needs to be called in a Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), a 2D graphics engine (for example, SGL), and an input consumption module (input consumer).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The input consumption module is used to deliver the input event received by the application process to a corresponding application display window. In embodiments of this application, an input event delivery switching module is added to the input consumption module, to deliver the received input event based on indicated input event delivery. Specific implementation is described in the following description. Details are not described herein.

The kernel layer is a layer between hardware and software. The kernel layer includes at least a display driver, a camera driver, an audio driver, and a sensor driver.

Based on the foregoing examples of the electronic device, the following describes an example of an input response optimization method according to an embodiment of this application.

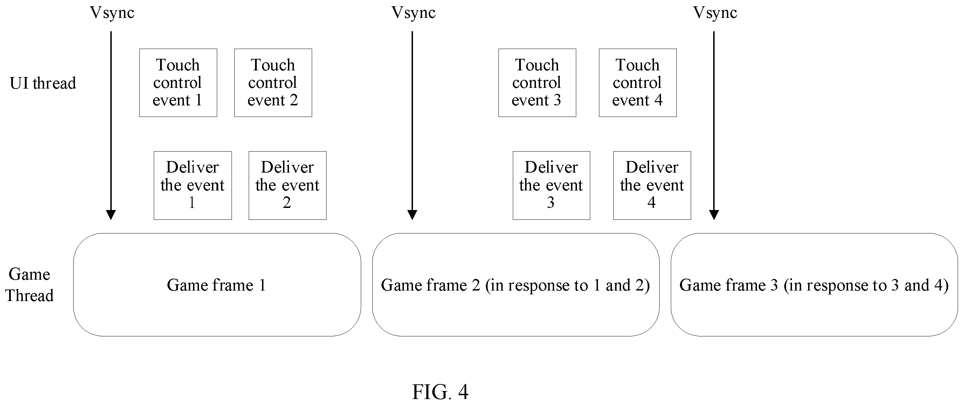

Based on the foregoing description, it can be seen that an application interface displayed in the game application can be obtained by rendering through the game engine. In addition, rendering of the game engine is not controlled by the VSync in the electronic device. Therefore, in a rendering process of the game engine, a corresponding image can be rendered in response to the touch control event, and there is no need to wait for the VSync signal to arrive and then deliver the touch control event for rendering, reducing a touch control delay. For ease of understanding, for example, refer to FIG. 4.

FIG. 4 shows a diagram of effect that can be implemented by an input response optimization method according to an embodiment of this application. It can be seen that a UI thread can receive a touch control event 1 and a touch control event 2 in a process in which a game thread displays a game frame 1. Then, the UI thread delivers the touch control event 1 and the touch control event 2 to a game engine for rendering, without waiting for a VSync signal to arrive. Similarly, the UI thread can receive a touch control event 3 and a touch control event 4 in a process in which the game thread displays a game frame 2. Then, the UI thread delivers the touch control event 3 and the touch control event 4 to a game engine for rendering, without waiting for the VSync signal to arrive. In addition, it can be seen that because the touch control event 1 and the touch control event 2 are delivered when the game frame 1 is displayed, a corresponding interface is displayed in response to the touch control event 1 and the touch control event 2 at a game frame 2. Similarly, because the touch control event 3 and the touch control event 4 are delivered when the game frame 2 is displayed, a corresponding interface is displayed in response to the touch control event 3 and the touch control event 4 at a game frame 3. In comparison with the displaying the corresponding interface in response to the touch control event 1 and the touch control event 2 until the game frame 3 in Fig. 1B, the input response optimization method provided in this embodiment of this application can respond to a touch control event faster and reduce a touch control delay. It may be understood that FIG. 4 is merely an effect diagram, and does not constitute a limitation on this embodiment of this application.

In addition, delivery of a touch control event is mainly used as an example in FIG. 4. During specific implementation, it may not be limited to the delivery of the touch control event, and delivery of another input event such as a mouse event or a keyboard event may also be implemented. This embodiment of this application can be applied to delivery of various input events, and a specific input event is not limited herein.

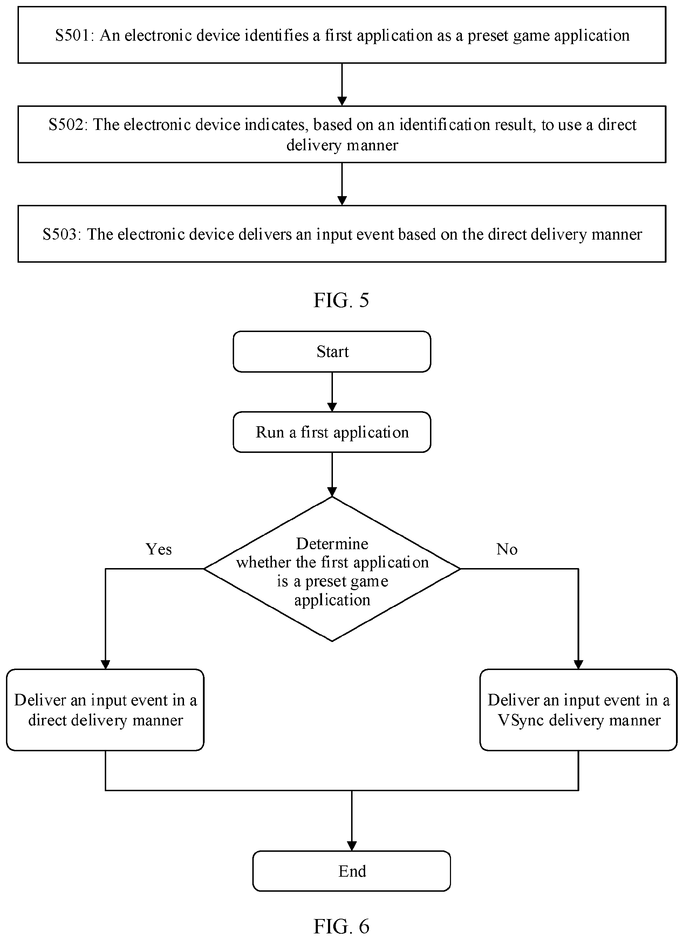

To implement the foregoing effect, the following describes an implementation process of an input response optimization method according to an embodiment of this application with reference to FIG. 5.

S501: An electronic device identifies a first application as a preset game application.

For example, during specific implementation, a plurality of applications can be run on the electronic device. For example, various applications such as gallery, calendar, and game are run. It may be understood that the run application in this embodiment of this application means an application run in a foreground of the electronic device, that is, a user interface of the application is displayed on a display of the electronic device. The input response optimization method according to this embodiment of this application is designed by using particularity of the game application. Therefore, the electronic device first needs to identify a scenario of the game application.

In a possible implementation, the electronic device can identify whether the first application is the preset game application by obtaining identification information of the run first application. For example, identification information of one application may be information such as a package name (package name) of the application or a universally unique identifier (universally unique identifier, UUID) of the application. It may be understood that the identification information of the application is not limited in this embodiment of this application, and the description herein is merely an example.

For example, the electronic device can obtain the identification information of the run first application through an application activity manager service AMS. For ease of subsequent description, the identification information of the first application is briefly referred to as target identification information. After obtaining the target identification information, the electronic device can compare the target identification information with preset application identification information, to learn whether the target identification information belongs to the preset application identification information.

For example, the preset application identification information may be a preset game application allowlist. The preset game application allowlist may include identification information of one or more preset game applications. The game application in the allowlist can optimize an input response delay by using the input response optimization method provided in this embodiment of this application. For example, assuming that the target identification information is a package name of the first application, and the preset game application allowlist includes a package name of the one or more preset game applications, the package name of the first application may be compared with the preset game application allowlist. If the package name of the first application is not on the preset game application allowlist, the first application does not belong to the preset game application. If the package name of the first application is on the preset game application allowlist, it can be learned that the first application belongs to the preset game application.

For example, the preset application identification information may exist in a configuration file. The configuration file may be, for example, a configuration file implemented based on an extensible markup language (XML), briefly referred to as an XML configuration file. The electronic device can obtain the preset application identification information by obtaining the configuration file. For example, the configuration file may be prestored in the electronic device, or may be downloaded from a corresponding server. This is not limited in this embodiment of this application.

S502: The electronic device indicates, based on an identification result, to use a direct delivery (direct deliver) manner.

For example, during specific implementation, an application other than the game application does not have particularity of the game application, that is, there is no game engine rendering an image for display in real time. Therefore, the electronic device retains an input event delivery manner based on a VSync signal (briefly referred to as a VSync delivery manner) for delivery of an input event corresponding to the application other than the game application. For the VSync delivery manner, for example, refer to the related descriptions in FIG. 1B. Details are not described herein. On this basis, in this embodiment of this application, a direct delivery manner is further added to deliver an input event corresponding to the preset game application. The direct delivery manner means a delivery manner for rendering without waiting for the VSync signal to arrive after receiving the input event, that is, the direct delivery manner is an input event delivery manner independent of a frequency limitation of the vertical synchronization signal. For the manner, for example, refer to the related descriptions in FIG. 4. Details are not described herein.

Based on the foregoing description, after identifying the first application as the preset game application, the electronic device may indicate to use the direct delivery manner to implement delivery of an input event of the first application.

S503: The electronic device delivers the input event in the direct delivery manner.

For example, during specific implementation, after indicating to use the direct delivery manner to implement delivery of the input event of the first application, the electronic device can deliver the input event corresponding to the first application in the direct delivery manner. For example, if the electronic device receives the input event corresponding to the first application, for example, when the electronic device displays a user interface of the first application, the electronic device may receive a touch operation from a user through the user interface, to generate an input of the input event. Then, there is no need to buffer the input event or wait for the VSync signal to arrive, and after receiving the input event, the electronic device can deliver the input event to a game engine for corresponding rendering and display.

For ease of better understanding of this embodiment of this application, for example, refer to a schematic flowchart shown in FIG. 6. For example, after starting to run the first application, the electronic device can determine whether the first application is the preset game application. If the first application is the preset game application, the electronic device delivers the input event in the direct delivery manner. If the first application is not the preset game application, the electronic device delivers the input event in the VSync delivery manner. For specific implementation, refer to the related descriptions in steps S501 to S503. Details are not described herein.

In a possible implementation, after the input event delivery manner used for the first application is indicated, information about the input event delivery manner used for the first application may be stored, so that when the first application is run again next time, there is no need to determine the input event delivery manner used for the first application again. For example, the electronic device may store the identification information of the first application and identification information indicating the input event delivery manner used for the first application in an associated manner, to help query the corresponding input event delivery manner by using the identification information of the first application.

For example, based on the foregoing description, when the electronic device switches the first application from being run in the foreground to being run in a background and then switches from being run in the background to being run in the foreground, or when the electronic device does not run the first application for first time, the electronic device can first query the input event delivery manner used for the first application. If the queried input event delivery manner is the VSync delivery manner or the direct delivery manner, the input event is delivered based on the corresponding delivery manner. If the query fails, the input event delivery manner used for the first application may be indicated based on the descriptions in steps S501 and S502.

This implementation can reduce computing overheads caused by needing to indicate the delivery manner again each time the application is run, to optimize system performance.

It can be seen based on the foregoing description that the direct delivery manner bypasses or masks a VSync delivery manner buffering mechanism and a VSync signal trigger mechanism, to increase a frequency of input event delivery and further deliver the input event more quickly, so that response can be made more quickly based on the input event, and an input response delay can be reduced.

In a possible implementation, after identifying the first application as the preset game application, and before indicating that the input event delivery manner is the direct delivery manner based on the identification result, the electronic device can further obtain a target frame rate of the first game application and a TP reporting rate.

For example, the target frame rate is an expected frame rate of the first application, or an actual output frame rate of the first application. The frame rate is frames per second FPS. For example, the electronic device can obtain the target frame rate of the first application through a display manager service DMS in an application framework layer.

In addition, after identifying the first application, the electronic device can further obtain a current TP reporting rate of the electronic device. For example, the electronic device can obtain the TP reporting rate through an input manager service IMS in a system library.

After obtaining the target frame rate and the TP reporting rate, the electronic device can determine whether the TP reporting rate is an integer multiple of the target frame rate. If the TP reporting rate is an integer multiple of the target frame rate, the electronic device indicates that the input event delivery manner is the direct delivery manner. If the TP reporting rate is not an integer multiple of the target frame rate, the electronic device indicates that the input event delivery manner is the VSync delivery manner.

In this implementation, only when the TP reporting rate is an integer multiple of the target frame rate, the input event corresponding to the first application is delivered in the direct delivery manner. This reduces a risk of unstable input response caused by a mismatch between the TP reporting rate and the frame rate of the game. For ease of understanding, the following describes an example.

For example, if the TP reporting rate is not an integer multiple of the target frame rate, quantities of input events received between different frames vary greatly, further resulting in an uneven dynamic change between frames. For example, FIG. 4 is used as an example. If the TP reporting rate is not an integer multiple of the target frame rate, two touch control events are received when a game frame 2 is displayed, and the two events are responded to in a game frame 3. For example, the two touch control events indicate to move an object. When the game frame 3 is displayed, five touch control events indicating to move the object may be received, and the five events are responded to in a game frame 4 (not drawn in FIG. 4). This causes the object to move slower in the game frame 3 and faster in the game frame 4, resulting in unsmooth and unstable movement that alternates between slow and fast.

If the TP reporting rate is an integer multiple of the target frame rate, quantities of input events received between different frames vary slightly or even are the same, implementing an even dynamic change between frames. FIG. 4 is still used as an example. If the TP reporting rate is not an integer multiple of the target frame rate, two touch control events are received when the game frame 2 is displayed, and the two events are responded to in the game frame 3. Similarly, for example, the two touch control events indicate to move an object. When the game frame 3 is displayed, two touch control events indicating to move the object are received, and the two events are responded to in the game frame 4 (not drawn in FIG. 4). Then, speeds at which the object moves in the game frame 3 and the game frame 4 remain the same, allowing the object to move smoothly and stably. That is, this reduces a risk of unstable input response caused by a mismatch between the TP reporting rate and the frame rate of the game.

In another possible implementation, if the input event delivery manner is indicated as the direct delivery manner, the obtained TP reporting rate needs to meet a preset upper limit threshold. To be specific, if the TP reporting rate is less than or equal to the threshold, and the TP reporting rate is an integer multiple of the target frame rate, the input event delivery manner can be indicated as the direct delivery manner. If the TP reporting rate is greater than the threshold, the VSync delivery manner is still used to deliver the input event. In this implementation, a risk of excessively high power consumption can be avoided. In the direct delivery manner, each time one input event is received, the input event is delivered. When a delivery frequency is higher, corresponding power consumption is higher. If the TP reporting rate is greater than the threshold, it indicates that a quantity of received input events may also increase significantly. In this case, if the direct delivery manner is used, power consumption may be excessively high, affecting overall system performance of the electronic device. Therefore, in this implementation, if the TP reporting rate is greater than the threshold, it is indicated to deliver the input event in the VSync delivery manner, to avoid the risk of excessively high power consumption.

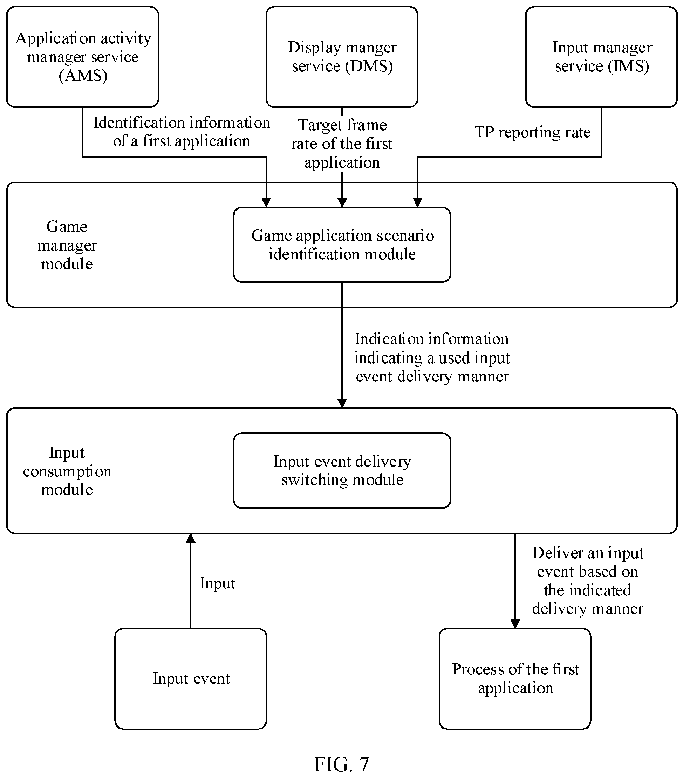

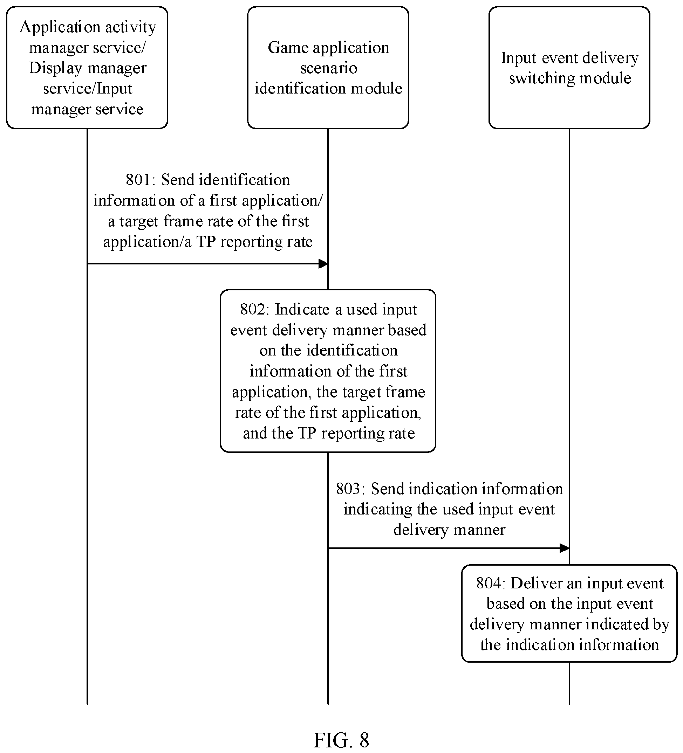

For example, for ease of understanding of an implementation process of the foregoing implementation, refer to FIG. 7 and FIG. 8. FIG. 7 shows an example of a data flow direction in software modules in a process in which the electronic device implements the foregoing solution. FIG. 8 shows an example of a procedure of interaction between the software modules. As shown in FIG. 7 and FIG. 8, one game application scenario identification module is added in a Game manager module in an embodiment of this application. In addition, one input event delivery switching module is also added to an input consumption module.

For example, after the first application is started, the game application scenario identification module can obtain the identification information of the first application from the application activity manager service AMS. Then, the game application scenario identification module identifies, based on the identification information of the first application, that the first application belongs to the preset game application. Then, the target frame rate of the first application is obtained from the display manager service DMS and the TP reporting rate is obtained from the input manager service IMS. Then, the game application scenario identification module indicates a used input event delivery manner based on the obtained target frame rate and TP reporting rate, and sends indication information indicating the used input event delivery manner to the input event delivery switching module in the input consumption module. The input event delivery switching module learns of the used input event delivery manner based on the indication information, and then delivers the input event to a process of the first application based on the used input event delivery manner as indicated, so that a game engine in the process can correspondingly render and display the input event in response to the input event. For a more detailed implementation description, refer to the foregoing descriptions. Details are not described herein. It may be understood that FIG. 7 and FIG. 8 are merely examples, and do not constitute a limitation on this embodiment of this application.

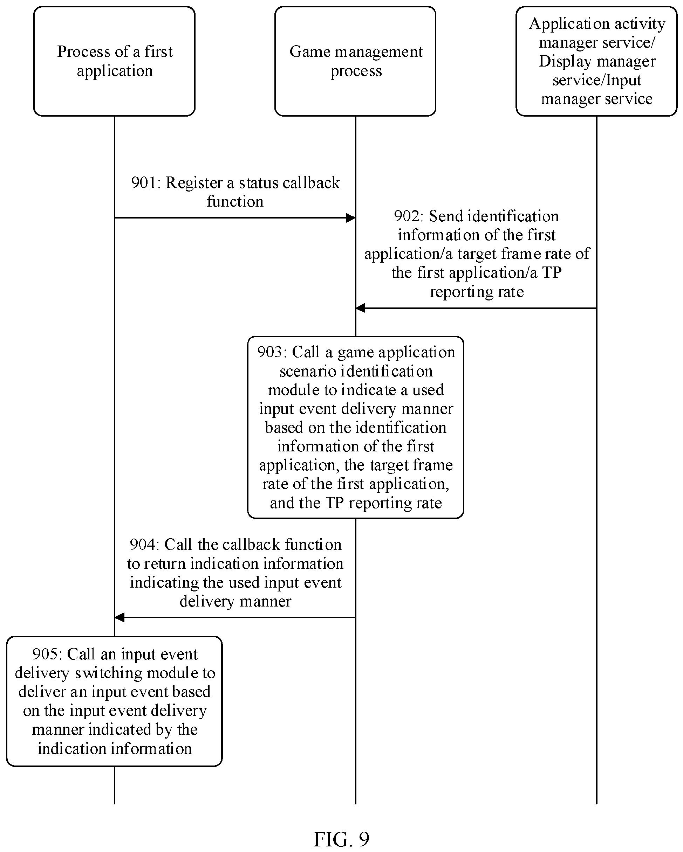

In a possible implementation, the input event delivery switching module can obtain the indication information indicating the used input event delivery manner through a status callback of the game manager module. For ease of understanding, for example, refer to FIG. 9. The electronic device starts the first application and runs the progress of the first application. Then, the process of the first application registers a status callback function with a game management process. The game management process can call the game manager module to perform a corresponding operation. For example, the process of the first application can call a native callback registration module of an electronic device system to implement registration of the status callback function. Then, the game management process receives information such as the identification information of the first application/the target frame rate of the first application/the TP reporting rate from the application activity manager service AMS, the display manager service DMS, the input manager service IMS. The game management process calls the game application scenario identification module to indicate the used input event delivery manner based on the identification information of the first application, the target frame rate of the first application, and the TP reporting rate. The game management process then calls the callback function to return the indication information indicating the used input event delivery manner to the process of the first application. The process of the first application calls the input event delivery switching module to indicate the used input event delivery manner based on the indication information, and deliver the input event based on the delivery manner.

In a possible implementation, the foregoing operations of registering the status callback function, receiving the indication information that is called back, and calling the input event delivery switching module to deliver the input event may be performed by an input event consumption thread (input consumer thread) in the process of the first application. In a possible implementation, the process of the first application includes a plurality of input event consumption threads. For example, when the user interface of the first application is displayed, and a prompt box such as a message notification or a prompt is also displayed, the user interface corresponds to one input event consumption thread, and the prompt box can also correspond to one input event consumption thread. Each of the plurality of input event consumption threads can call the input event delivery switching module to deliver the input event. Then, the plurality of input event consumption threads can reuse a same status callback function. That is, the indication information indicating the used input event delivery manner that is returned by the game management process to the process of the first application by calling the callback function can be shared by the plurality of input event consumption threads. This reduces overheads of registering the callback function a plurality of times.

In a possible implementation, the process of the first application may register the status callback function with the game management process after the electronic device identifies the first application as the preset game application. For example, after starting the first application and running the process of the first application, the electronic device can first identify whether the first application is the preset game application by using the game manager module. As for specific implementation, refer to the foregoing corresponding description. Details are not described herein. Then, the process of the first application can query the game manager module to determine whether the first application is the preset game application. If the first application belongs to the preset game application, the process of the first application can register the status callback function with the game management process and perform a subsequent operation such as monitoring the input event delivery manner. If the first application does not belong to the preset game application, the process of the first application neither registers the status callback function with the game management process nor performs a subsequent operation such as monitoring the input event delivery manner. This implementation can avoid registration and notification of a large quantity of irrelevant applications in a system, and reduce a resource occupied.

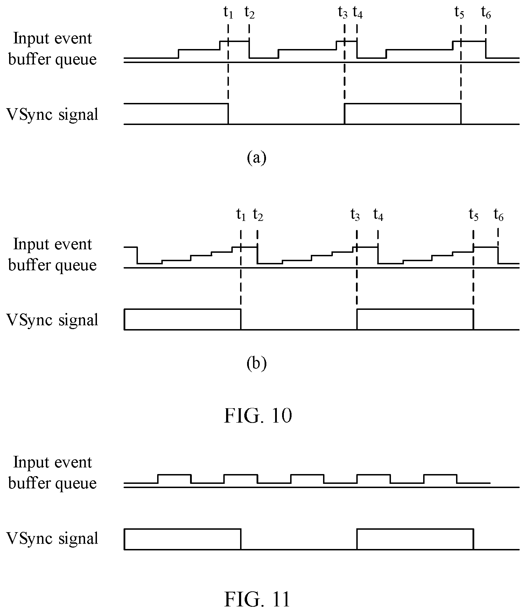

In conclusion, in the input response optimization method provided in this embodiment of this application, an application process of the game application can deliver an input event to the game engine in the direct delivery manner for rendering, without waiting for the VSync signal to arrive. This implements quick response of the input event, and reduces the input response delay. For more intuitive understanding of effect implemented by this embodiment of this application, for example, refer to FIG. 10 and FIG. 11.

First, (a) and (b) in FIG. 10 show diagrams of examples of triggering delivery of an input event based on a VSync signal in two existing implementation solutions. It can be seen that a quantity of buffered input events can be indicated by using an input event buffer queue. A rising edge or a falling edge of the VSync signal can trigger delivery of the input event. For example, in (a) and (b) in FIG. 10, a time moment t1 and a time moment t5 are time moments when the falling edge of the VSync signal arrives, and a time moment t3 is a time moment when the rising edge of the VSync signal arrives.

For example, before the time moment t1 when the falling edge of the VSync signal arrives, the input events in the input event buffer queue continuously accumulate. Then, at the time moment t1 when the falling edge of the VSync signal arrives, the input events start to be delivered based on the trigger of that falling edge of the VSync signal. Due to a specific delay in a delivery processing process, it can be seen that the input events in the input event buffer queue decrease since the time moment t2. After this delivery ends, the input events in the input event buffer queue start to accumulate again. Then, at the time moment t3 when the rising edge of the VSync signal arrives, the input events start to be delivered based on the trigger of that rising edge of the VSync signal. Due to a specific delay in a delivery processing process, it can be seen that the input events in the input event buffer queue decrease since the time moment t4. For descriptions of time moments t5 and t6, refer to the time moments t1 and t2. Details are not described herein. It can be seen that in the existing implementation solutions, due to a limitation of a frequency of the VSync, the input events accumulate and cannot be delivered in time.

For example, refer to FIG. 11. FIG. 11 shows a diagram of delivering an input event in a direct delivery manner according to an embodiment of this application. It can be seen that a quantity of buffered input events can be also indicated by using an input event buffer queue. A difference lies in that in an implementation progress of delivering the input event in the direct delivery manner, each time one input event is received, the input event is delivered without being limited by a VSync signal, avoiding accumulation of the input event. Further, this implements quick response of the input event, and reduces the input response delay.

It may be understood that FIG. 10 and FIG. 11 are merely examples, and do not constitute a limitation on this embodiment of this application.

An embodiment of this application provides an electronic device, where the electronic device includes one or more processors and one or more memories; and the one or more memories are coupled to the one or more processors, the one or more memories are configured to store computer program code, the computer program code includes computer instructions, and when the one or more processors execute the computer instructions, the electronic device is enabled to perform the methods described in the foregoing embodiments.

An embodiment of this application further provides a chip system. The chip system is used in an electronic device, and the chip system includes one or more processors. The one or more processors are configured to invoke computer instructions to enable the electronic device to perform the methods described in the foregoing embodiments.

An embodiment of this application further provides a computer program product including instructions. When the computer program product runs on an electronic device, the electronic device is enabled to perform the method described in the foregoing embodiments.

An embodiment of this application further provides a computer-readable storage medium, including instructions. When the instructions are run on an electronic device, the electronic device is enabled to perform the methods described in the foregoing embodiments.

It may be understood that the implementations of this application may be randomly combined to achieve different technical effects.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or some of the procedures of the methods in the foregoing embodiments may be implemented by a computer program by instructing related hardware. The program may be stored in a computer-readable storage medium. When the program is executed, the procedures in the foregoing method embodiments may be performed. The foregoing storage medium includes any medium that can store program code, such as a ROM, a random access memory RAM, a magnetic disk, or an optical disc.

In conclusion, the foregoing descriptions are merely examples of embodiments of the technical solutions of the present invention, but are not intended to limit the protection scope of the present invention. Any modification, equivalent replacement, improvement, or the like made according to the disclosure of the present invention shall fall within the protection scope of the present invention.

In conclusion, in the input response optimization method provided in this embodiment of this application, an application process of the game application can deliver an input event to the game engine in the direct delivery manner for rendering, without waiting for the VSync signal to arrive. This implements quick response of the input event, and reduces the input response delay. For more intuitive understanding of effect implemented by this embodiment of this application, for example, refer to FIG. 10 and FIG. 11.

First, (a) and (b) in FIG. 10 show diagrams of examples of triggering delivery of an input event based on a VSync signal in two existing implementation solutions. It can be seen that a quantity of buffered input events can be indicated by using an input event buffer queue. A rising edge or a falling edge of the VSync signal can trigger delivery of the input event. For example, in (a) and (b) in FIG. 10, a time moment t1 and a time moment t5 are time moments when the falling edge of the VSync signal arrives, and a time moment t3 is a time moment when the rising edge of the VSync signal arrives.

For example, before the time moment t1 when the falling edge of the VSync signal arrives, the input events in the input event buffer queue continuously accumulate. Then, at the time moment t1 when the falling edge of the VSync signal arrives, the input events start to be delivered based on the trigger of that falling edge of the VSync signal. Due to a specific delay in a delivery processing process, it can be seen that the input events in the input event buffer queue decrease since the time moment t2. After this delivery ends, the input events in the input event buffer queue start to accumulate again. Then, at the time moment t3 when the rising edge of the VSync signal arrives, the input events start to be delivered based on the trigger of that rising edge of the VSync signal. Due to a specific delay in a delivery processing process, it can be seen that the input events in the input event buffer queue decrease since the time moment t4. For descriptions of time moments t5 and t6, refer to the time moments t1 and t2. Details are not described herein. It can be seen that in the existing implementation solutions, due to a limitation of a frequency of the VSync, the input events accumulate and cannot be delivered in time.

For example, refer to FIG. 11. FIG. 11 shows a diagram of delivering an input event in a direct delivery manner according to an embodiment of this application. It can be seen that a quantity of buffered input events can be also indicated by using an input event buffer queue. A difference lies in that in an implementation progress of delivering the input event in the direct delivery manner, each time one input event is received, the input event is delivered without being limited by a VSync signal, avoiding accumulation of the input event. Further, this implements quick response of the input event, and reduces the input response delay.

It may be understood that FIG. 10 and FIG. 11 are merely examples, and do not constitute a limitation on this embodiment of this application.

An embodiment of this application provides an electronic device, where the electronic device includes one or more processors and one or more memories; and the one or more memories are coupled to the one or more processors, the one or more memories are configured to store computer program code, the computer program code includes computer instructions, and when the one or more processors execute the computer instructions, the electronic device is enabled to perform the methods described in the foregoing embodiments.

An embodiment of this application further provides a chip system. The chip system is used in an electronic device, and the chip system includes one or more processors. The one or more processors are configured to invoke computer instructions to enable the electronic device to perform the methods described in the foregoing embodiments.

An embodiment of this application further provides a computer program product including instructions. When the computer program product runs on an electronic device, the electronic device is enabled to perform the method described in the foregoing embodiments.

An embodiment of this application further provides a computer-readable storage medium, including instructions. When the instructions are run on an electronic device, the electronic device is enabled to perform the methods described in the foregoing embodiments.

It may be understood that the implementations of this application may be randomly combined to achieve different technical effects.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another web site, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or some of the procedures of the methods in the foregoing embodiments may be implemented by a computer program by instructing related hardware. The program may be stored in a computer-readable storage medium. When the program is executed, the procedures in the foregoing method embodiments may be performed. The foregoing storage medium includes any medium that can store program code, such as a ROM, a random access memory RAM, a magnetic disk, or an optical disc.

## Claims

1. An input response optimization method, wherein the method is applied to an electronic device (100), comprising a touch panel and the method comprises:
before detecting a first input event of a user on a first interface, obtaining identification information of a first application;
learning (S501), based on the identification information of the first application, that the first application belongs to a preset game application;
detecting the first input event of the user on the first interface, wherein the first interface is an interface of the first application;
when the first application belongs to the preset game application, before a rising edge or a falling edge of a vertical synchronization signal occurs, delivering (S503) the first input event to a game engine, and rendering an image through the game engine in response to the first input event;
wherein the first input event comprises a touch control event, and after the learning (S501), based on the identification information of the first application, that the first application belongs to the preset game application, the method further comprises:
obtaining a frame rate of the first application and a touch panel TP reporting rate of the electronic device; and
only when the TP reporting rate is an integer multiple of the frame rate, indicating (S502) to use a direct delivery manner, wherein the direct delivery manner is an input event delivery manner independent of a frequency limitation of the vertical synchronization signal;
detecting a second input event of the user on a second interface, wherein the second interface is an interface of a second application; and
when the second application does not belong to the preset game application, after a rising edge or a falling edge of the vertical synchronization signal occurs, delivering the second input event, and rendering an image in response to the second input event.

2. The method according to claim 1, wherein the TP reporting rate is less than or equal to a preset threshold.

3. The method according to claim 1 or 2, wherein after the indicating (S502) to use a direct delivery manner, the method further comprises:
notifying, through a status callback, a process of the first application of indication information indicating to use the direct delivery manner; and
delivering the first input event to the game engine through the process of the first application before the rising edge or the falling edge of the vertical synchronization signal occurs.

4. The method according to any one of claims 1 to 3, wherein after the learning (S501), based on the identification information of the first application, that the first application belongs to the preset game application, the method further comprises:
registering a status callback function, wherein the status callback function is used to notify the process of the first application of indication information indicating a used input event delivery manner.

5. The method according to claim 4, wherein the process of the first application comprises a plurality of input event consumption threads, and the plurality of input event consumption threads are used to jointly deliver an input event acting on the first application; and
the plurality of input event consumption threads share the indication information indicating the used input event delivery manner.

6. The method according to any one of claims 1 to 5, wherein after the indicating (S502) to use a direct delivery manner, the method further comprises: storing the identification information of the first application and identification information of the direct delivery manner in an associated manner; and
the method further comprises:
exiting running of the first application;
when running the first application again, querying, based on the identification information of the first application, the input event delivery manner used for the first application, to obtain the identification information of the direct delivery manner; and
delivering, based on an indication of the identification information of the direct delivery manner, the input event acting on the first application in the direct delivery manner.

7. The method according to any one of claims 1 to 6, wherein learning (S501), based on the identification information of the first application, that the first application belongs to the preset game application, comprises:
comparing the identification information of the first application with identification information of an application comprised in the preset allowlist, wherein the preset allowlist comprises identification information of the preset game application; and
when the preset allowlist comprises the identification information of the first application, learning that the first application belongs to the preset game application.

8. The method according to claim 7, wherein the preset allowlist is stored in a configuration file.

9. The method according to any one of claims 1 to 8, wherein the delivering the second input event, and rendering an image in response to the second input event comprises:
delivering the second input event to a native rendering module of the electronic device (100), and rendering the image through the rendering module in response to the second input event.

10. An electronic device (100), comprising: a touch panel, one or more processors (110), and one or more memories (121), wherein the one or more processors (110) are coupled to the touch panel and the one or more memories (121), the one or more memories (121) are configured to store computer program code, the computer program code comprises computer instructions, and when the one or more processors (110) execute the computer instructions, the electronic device (100) is enabled to perform the method according to any one of claims 1 to 9.

11. A computer-readable storage medium, comprising instructions, wherein when the instructions are run on an electronic device (100), according to claim 10 the electronic device (100) is enabled to perform the method according to any one of claims 1 to 9.

12. A computer program product comprising instructions, wherein when the computer program product runs on an electronic device (100), according to claim 10, the electronic device (100) is enabled to perform the method according to any one of claims 1 to 9.

## Patentansprüche

1. Eingabeantwort-Optimierungsverfahren, wobei das Verfahren auf eine elektronische Vorrichtung (100) angewendet wird, die ein Touchpanel umfasst, und das Verfahren umfasst:
vor einem Erkennen eines ersten Eingabeereignisses eines Benutzers auf einer ersten Schnittstelle, Erhalten von Identifikationsinformationen einer ersten Anwendung;
Feststellen (S501), basierend auf den Identifikationsinformationen der ersten Anwendung, dass die erste Anwendung zu einer voreingestellten Spielanwendung gehört;
Erkennen des ersten Eingabeereignisses des Benutzers auf der ersten Schnittstelle, wobei die erste Schnittstelle eine Schnittstelle der ersten Anwendung ist;
wenn die erste Anwendung zu der voreingestellten Spielanwendung gehört, vor einem Auftreten einer ansteigenden Flanke oder einer abfallenden Flanke eines vertikalen Synchronisationssignals, Übermitteln (S503) des ersten Eingabeereignisses an eine Spiel-Engine und Rendern eines Bildes durch die Spiel-Engine als Reaktion auf das erste Eingabeereignis;
wobei das erste Eingabeereignis ein Berührungssteuerungsereignis umfasst, und nach dem Feststellen (S501), basierend auf den Identifikationsinformationen der ersten Anwendung, dass die erste Anwendung zu der voreingestellten Spielanwendung gehört, das Verfahren ferner umfasst:
Erhalten einer Bildrate der ersten Anwendung und einer Touchpanel-, TP-, Melderate der elektronischen Vorrichtung; und
nur wenn die TP-Melderate ein ganzzahliges Vielfaches der Bildrate ist, Angeben (S502), eine direkte Übermittlungsweise zu verwenden, wobei die direkte Übermittlungsweise eine Eingabeereignis-Übermittlungsweise ist, die von einer Frequenzbegrenzung des vertikalen Synchronisationssignals unabhängig ist;
Erkennen eines zweiten Eingabeereignisses des Benutzers auf einer zweiten Schnittstelle, wobei die zweite Schnittstelle eine Schnittstelle einer zweiten Anwendung ist; und
wenn die zweite Anwendung nicht zu der voreingestellten Spielanwendung gehört, nach einem Auftreten einer ansteigenden Flanke oder einer abfallenden Flanke des vertikalen Synchronisationssignals, Übermitteln des zweiten Eingabeereignisses und Rendern eines Bildes als Reaktion auf das zweite Eingabeereignis.

2. Verfahren nach Anspruch 1, wobei die TP-Melderate kleiner als oder gleich einem voreingestellten Schwellenwert ist.

3. Verfahren nach Anspruch 1 oder 2, wobei nach dem Angeben (S502), eine direkte Übermittlungsweise zu verwenden, das Verfahren ferner umfasst:
Benachrichtigen, durch einen Status-Rückruf, eines Prozesses der ersten Anwendung über eine Angabeinformation, die angibt, die direkte Übermittlungsweise zu verwenden; und
Übermitteln des ersten Eingabeereignisses an die Spiel-Engine durch den Prozess der ersten Anwendung, bevor die ansteigende Flanke oder die abfallende Flanke des vertikalen Synchronisationssignals auftritt.

4. Verfahren nach einem der Ansprüche 1 bis 3, wobei nach dem Feststellen (S501), basierend auf den Identifikationsinformationen der ersten Anwendung, dass die erste Anwendung zu der voreingestellten Spielanwendung gehört, das Verfahren ferner umfasst:
Registrieren einer Status-Rückruffunktion, wobei die Status-Rückruffunktion verwendet wird, um den Prozess der ersten Anwendung über eine Angabeinformation zu benachrichtigen, die eine verwendete Eingabeereignis-Übermittlungsweise angibt.

5. Verfahren nach Anspruch 4, wobei der Prozess der ersten Anwendung eine Mehrzahl von Eingabeereignis-Verbrauchs-Threads umfasst, und die Mehrzahl von Eingabeereignis-Verbrauchs-Threads verwendet wird, um gemeinsam ein Eingabeereignis zu übermitteln, das auf die erste Anwendung einwirkt; und
die Mehrzahl von Eingabeereignis-Verbrauchs-Threads die Angabeinformation gemeinsam nutzt, die die verwendete Eingabeereignis-Übermittlungsweise angibt.

6. Verfahren nach einem der Ansprüche 1 bis 5, wobei nach dem Angeben (S502), eine direkte Übermittlungsweise zu verwenden, das Verfahren ferner umfasst: Speichern der Identifikationsinformationen der ersten Anwendung und von Identifikationsinformationen der direkten Übermittlungsweise in einer verknüpften Weise; und
das Verfahren ferner umfasst:
Beenden der Ausführung der ersten Anwendung;
wenn die erste Anwendung erneut ausgeführt wird, Abfragen, basierend auf den Identifikationsinformationen der ersten Anwendung, der für die erste Anwendung verwendeten Eingabeereignis-Übermittlungsweise, um die Identifikationsinformationen der direkten Übermittlungsweise zu erhalten; und
Übermitteln, basierend auf einer Angabe der Identifikationsinformationen der direkten Übermittlungsweise, des auf die erste Anwendung einwirkenden Eingabeereignisses in der direkten Übermittlungsweise.

7. Verfahren nach einem der Ansprüche 1 bis 6, wobei das Feststellen (S501), basierend auf den Identifikationsinformationen der ersten Anwendung, dass die erste Anwendung zu der voreingestellten Spielanwendung gehört, umfasst:
Vergleichen der Identifikationsinformationen der ersten Anwendung mit Identifikationsinformationen einer in der voreingestellten Positivliste umfassten Anwendung, wobei die voreingestellte Positivliste Identifikationsinformationen der voreingestellten Spielanwendung umfasst; und
wenn die voreingestellte Positivliste die Identifikationsinformationen der ersten Anwendung umfasst, Feststellen, dass die erste Anwendung zu der voreingestellten Spielanwendung gehört.

8. Verfahren nach Anspruch 7, wobei die voreingestellte Positivliste in einer Konfigurationsdatei gespeichert ist.

9. Verfahren nach einem der Ansprüche 1 bis 8, wobei das Übermitteln des zweiten Eingabeereignisses und Rendern eines Bildes als Reaktion auf das zweite Eingabeereignis umfasst:
Übermitteln des zweiten Eingabeereignisses an ein natives Rendering-Modul der elektronischen Vorrichtung (100) und Rendern des Bildes durch das Rendering-Modul als Reaktion auf das zweite Eingabeereignis.

10. Elektronische Vorrichtung (100), umfassend: ein Touchpanel, einen oder mehrere Prozessoren (110) und einen oder mehrere Speicher (121), wobei der eine oder die mehreren Prozessoren (110) mit dem Touchpanel und dem einen oder den mehreren Speichern (121) gekoppelt sind, der eine oder die mehreren Speicher (121) dazu konfiguriert sind, Computerprogrammcode zu speichern, der Computerprogrammcode Computeranweisungen umfasst, und wenn der eine oder die mehreren Prozessoren (110) die Computeranweisungen ausführen, die elektronische Vorrichtung (100) befähigt wird, das Verfahren nach einem der Ansprüche 1 bis 9 durchzuführen.

11. Computerlesbares Speichermedium, umfassend Anweisungen, wobei, wenn die Anweisungen auf einer elektronischen Vorrichtung (100) nach Anspruch 10 ausgeführt werden, die elektronische Vorrichtung (100) befähigt wird, das Verfahren nach einem der Ansprüche 1 bis 9 durchzuführen.

12. Computerprogrammprodukt, umfassend Anweisungen, wobei, wenn das Computerprogrammprodukt auf einer elektronischen Vorrichtung (100) nach Anspruch 10 ausgeführt wird, die elektronische Vorrichtung (100) befähigt wird, das Verfahren nach einem der Ansprüche 1 bis 9 durchzuführen.

## Revendications

1. Procédé d'optimisation de réponse d'entrée, dans lequel le procédé est appliqué à un dispositif électronique (100), comprenant un panneau tactile, et le procédé comprend :
avant la détection d'un premier événement d'entrée d'un utilisateur sur une première interface, l'obtention d'informations d'identification d'une première application ;
la détermination (S501), sur la base des informations d'identification de la première application, du fait que la première application appartient à une application de jeu prédéfinie ;
la détection du premier événement d'entrée de l'utilisateur sur la première interface, dans lequel la première interface est une interface de la première application ;
lorsque la première application appartient à l'application de jeu prédéfinie, avant qu'un front montant ou un front descendant d'un signal de synchronisation verticale ne se produise, la délivrance (S503) du premier événement d'entrée à un moteur de jeu, et le rendu d'une image par l'intermédiaire du moteur de jeu en réponse au premier événement d'entrée ;
dans lequel le premier événement d'entrée comprend un événement de commande tactile, et après la détermination (S501), sur la base des informations d'identification de la première application, du fait que la première application appartient à l'application de jeu prédéfinie, le procédé comprend en outre :
l'obtention d'une fréquence de trame de la première application et d'une fréquence de rapport de panneau tactile, TP, du dispositif électronique ; et
uniquement lorsque la fréquence de rapport TP est un multiple entier de la fréquence de trame, l'indication (S502) d'utiliser un mode de délivrance directe, dans lequel le mode de délivrance directe est un mode de délivrance d'événement d'entrée indépendant d'une limitation de fréquence du signal de synchronisation verticale ;
la détection d'un deuxième événement d'entrée de l'utilisateur sur une deuxième interface, dans lequel la deuxième interface est une interface d'une deuxième application ; et
lorsque la deuxième application n'appartient pas à l'application de jeu prédéfinie, après qu'un front montant ou un front descendant du signal de synchronisation verticale s'est produit, la délivrance du deuxième événement d'entrée, et le rendu d'une image en réponse au deuxième événement d'entrée.

2. Procédé selon la revendication 1, dans lequel la fréquence de rapport TP est inférieure ou égale à un seuil prédéfini.

3. Procédé selon la revendication 1 ou 2, dans lequel après l'indication (S502) d'utiliser un mode de délivrance directe, le procédé comprend en outre :
la notification, par l'intermédiaire d'un rappel d'état, à un processus de la première application d'une information d'indication indiquant d'utiliser le mode de délivrance directe ; et
la délivrance du premier événement d'entrée au moteur de jeu par l'intermédiaire du processus de la première application avant que le front montant ou le front descendant du signal de synchronisation verticale ne se produise.

4. Procédé selon l'une des revendications 1 à 3, dans lequel après la détermination (S501), sur la base des informations d'identification de la première application, du fait que la première application appartient à l'application de jeu prédéfinie, le procédé comprend en outre :
l'enregistrement d'une fonction de rappel d'état, dans lequel la fonction de rappel d'état est utilisée pour notifier au processus de la première application une information d'indication indiquant un mode de délivrance d'événement d'entrée utilisé.

5. Procédé selon la revendication 4, dans lequel le processus de la première application comprend une pluralité de threads de consommation d'événement d'entrée, et la pluralité de threads de consommation d'événement d'entrée est utilisée pour délivrer conjointement un événement d'entrée agissant sur la première application ; et
la pluralité de threads de consommation d'événement d'entrée partage l'information d'indication indiquant le mode de délivrance d'événement d'entrée utilisé.

6. Procédé selon l'une des revendications 1 à 5, dans lequel après l'indication (S502) d'utiliser un mode de délivrance directe, le procédé comprend en outre : le stockage des informations d'identification de la première application et d'informations d'identification du mode de délivrance directe d'une manière associée ; et
le procédé comprend en outre :
l'arrêt de l'exécution de la première application ;
lors d'une nouvelle exécution de la première application, l'interrogation, sur la base des informations d'identification de la première application, du mode de délivrance d'événement d'entrée utilisé pour la première application, pour obtenir les informations d'identification du mode de délivrance directe ; et
la délivrance, sur la base d'une indication des informations d'identification du mode de délivrance directe, de l'événement d'entrée agissant sur la première application dans le mode de délivrance directe.

7. Procédé selon l'une des revendications 1 à 6, dans lequel la détermination (S501), sur la base des informations d'identification de la première application, du fait que la première application appartient à l'application de jeu prédéfinie, comprend :
la comparaison des informations d'identification de la première application avec des informations d'identification d'une application comprise dans la liste d'autorisation prédéfinie, dans lequel la liste d'autorisation prédéfinie comprend des informations d'identification de l'application de jeu prédéfinie ; et
lorsque la liste d'autorisation prédéfinie comprend les informations d'identification de la première application, la détermination du fait que la première application appartient à l'application de jeu prédéfinie.

8. Procédé selon la revendication 7, dans lequel la liste d'autorisation prédéfinie est stockée dans un fichier de configuration.

9. Procédé selon l'une des revendications 1 à 8, dans lequel la délivrance du deuxième événement d'entrée, et le rendu d'une image en réponse au deuxième événement d'entrée comprennent :
la délivrance du deuxième événement d'entrée à un module de rendu natif du dispositif électronique (100), et le rendu de l'image par l'intermédiaire du module de rendu en réponse au deuxième événement d'entrée.

10. Dispositif électronique (100), comprenant : un panneau tactile, un ou plusieurs processeurs (110), et une ou plusieurs mémoires (121), dans lequel les un ou plusieurs processeurs (110) sont couplés au panneau tactile et aux une ou plusieurs mémoires (121), les une ou plusieurs mémoires (121) sont configurées pour stocker un code de programme informatique, le code de programme informatique comprend des instructions informatiques, et lorsque les un ou plusieurs processeurs (110) exécutent les instructions informatiques, le dispositif électronique (100) est rendu capable de réaliser le procédé selon l'une des revendications 1 à 9.

11. Support de stockage lisible par ordinateur, comprenant des instructions, dans lequel lorsque les instructions sont exécutées sur un dispositif électronique (100) selon la revendication 10, le dispositif électronique (100) est rendu capable de réaliser le procédé selon l'une des revendications 1 à 9.

12. Produit de programme informatique comprenant des instructions, dans lequel lorsque le produit de programme informatique est exécuté sur un dispositif électronique (100) selon la revendication 10, le dispositif électronique (100) est rendu capable de réaliser le procédé selon l'une des revendications 1 à 9.
